# EUROPÄISCHE PATENTSCHRIFT

(11) **EP 2 105 647 B1**
(45) Veröffentlichungstag und Bekanntmachung des Hinweises auf die Patenterteilung: **08.01.2014**
(21) Anmeldenummer: 09002904.2
(22) Anmeldetag: 28.02.2009
(51) Int. Cl.: F16L 37/12, F16L 37/084, F16L 37/14

(54) **Lösbare Steckverbindung für Rohrleitungen od.dgl.**
Reversible connector for conduits or similar
Raccord enfichable amovible pour conduites ou analogues

(30) Priorität: 27.03.2008 DE 102008015811
(43) Veröffentlichungstag der Anmeldung: 30.09.2009
(73) Patentinhaber: FTE automotive GmbH, 96106 Ebern (DE)
(72) Erfinder: Spielmann, Norbert, 96106 Ebern (DE)
(74) Vertreter: Oppermann, Mark

(56) Entgegenhaltungen:
- EP-A2- 1 705 417
- DE-B3-102004 062 887

## Beschreibung

Die Erfindung bezieht sich auf eine lösbare Steckverbindung für Rohrleitungen od. dgl. entsprechend dem Oberbegriff des Patentanspruchs 1. Die Erfindung bezieht sich insbesondere auf eine lösbare Steckverbindung für Rohrleitungen od. dgl. in hydraulischen Kupplungsbetätigungs- und Bremsanlagen für Kraftfahrzeuge.

### STAND DER TECHNIK

Bei einer bekannten Steckverbindung (EP 1 635 103 A1) ist das Sicherungselement beim Einstecken des Einsteckteils in das Aufnahmeteil aufzufedern, d.h. gegen die Federkraft elastisch aufweitend zu verformen, bis das Sicherungselement am Ende des Einsteckvorgangs hinter einer Widerlagerfläche am Einsteckteil verrastet, wodurch das Einsteckteil der Steckverbindung in der Endmontageposition gegen ein unbeabsichtigtes Lösen vom Aufnahmeteil gesichert ist.

Diese bekannte Steckverbindung erlaubt zwar eine zuverlässige Sicherung des Einsteckteils gegen ein unbeabsichtigtes Herausziehen des Einsteckteils aus dem Aufnahmeteil in der Endmontageposition, jedoch sind zum Auffedern des Sicherungselements erhebliche Montagekräfte erforderlich. Dadurch ist die Montage der Steckverbindung erschwert, insbesondere bei Überkopfmontage-Situationen und an schwer zugänglichen oder nicht im Sichtbereich befindlichen Stellen.

Eine Steckverbindung gemäß dem Oberbegriff des Patentanspruchs 1 ist aus der Druckschrift EP 1 705 417 A2 bekannt.

### AUFGABENSTELLUNG

Der Erfindung liegt die Aufgabe zugrunde, eine lösbare Steckverbindung der im Oberbegriff des Patentanspruchs 1 angegebenen Ausbildung bereitzustellen, die im Vergleich mit dem Stand der Technik geringere Montagekräfte erforderlich macht und daher auch in schwierigen Montage-Situationen zuverlässig montierbar ist.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind in den Patentansprüchen 2 bis 10 angegeben und werden nachfolgend ebenfalls näher beschrieben.

Erfindungsgemäß ist bei einer lösbaren Steckverbindung für Rohrleitungen od. dgl., insbesondere in hydraulischen Kupplungsbetätigungs- und Bremsanlagen für Kraftfahrzeuge, mit einem Aufnahmeteil, einem in das Aufnahmeteil in einer Fügerichtung einsteckbaren, mit der Rohrleitung od. dgl. verbundenen Einsteckteil, einem zwischen dem Aufnahmeteil und dem Einsteckteil abdichtenden Dichtelement und einem am Aufnahmeteil in einer Vormontageposition angebrachten, federelastischen Sicherungselement zur Sicherung des Einsteckteils am Aufnahmeteil in der Endmontageposition der Steckverbindung, wobei daß das Sicherungselement in der Vormontageposition als Federkraftspeicher vorgespannt am Aufnahmeteil angebracht und aus seinem vorgespannten Zustand in der Endmontageposition der Steckverbindung zur Sicherung des Einsteckteils am Aufnahmeteil auslösbar ist; das Sicherungselement zum Auslösen der Sicherung des Einsteckteils am Aufnahmeteil durch das Einsteckteil in Fügerichtung verlagerbar am Aufnahmeteil angeordnet, wobei am Einsteckteil ein für die Verlagerung des Sicherungselements vorgesehner Mitnehmer fest angebracht ist.

Nach dem Grundgedanken der Erfindung werden die Haltekräfte der Steckverbindung nicht wie nach dem Stand der Technik durch ein das Sicherungselement beim Fügevorgang mit erheblichem Kraftaufwand aufweitendes Auffedern erzielt, sondern durch Vorspannen des Sicherungselements am Aufnahmeteil. Das Sicherungselement wirkt hierbei wie ein Federkraftspeicher und kann ohne Schwierigkeiten am Aufnahmeteil mit Vorspannung angebracht werden, bevor das Einsteckteil mit dem Aufnahmeteil vereinigt wird. In der Endmontageposition wird die gespeicherte Federkraft des Sicherungselements mit nur geringem Kraftaufwand ausgelöst und das Sicherungselement schnappt in die Sicherungsposition für das Einsteckteil ein.

Darüber hinaus ist das Sicherungselement zum Auslösen der Sicherung des Einsteckteils am Aufnahmeteil durch das Einsteckteil in Fügerichtung verlagerbar am Aufnahmeteil angeordnet. Dadurch wird der rastende Eingriff des Federarms bzw. der Federarme des Sicherungselements durch eine vom Einsteckteil bewirkte Relativverlagerung, vorzugsweise Relativverschiebung des Sicherungselements am Aufnahmeteil ausgelöst. Zu diesem Zweck ist am Einsteckteil ein für die Verlagerung des Sicherungselements vorgesehener Mitnehmer fest angebracht. Dieser Mitnehmer kann einteilig an das Einsteckteil angeformt sein.

Vorteilhaft kann die Anordnung so getroffen sein, dass das Sicherungselement in der Vormontageposition mit mindestens einem Federarm quer zur Fügerichtung unter Erzeugung des vorgespannten Zustands nach außen gebogen mindestens einer Haltefläche am Aufnahmeteil anliegt, von welcher der Federarm beim Auslösen zum die Steckverbindung sichernden rastenden Eingriff zwischen einer Anlagefläche am Aufnahmeteil und einer Anlagefläche am Einsteckteil lösbar ist.

Vorzugsweise besitzt dabei das Sicherungselement zwei gegenüberliegende Federarme, die in der Vormontageposition auseinander gebogen gegenüberliegenden Halteflächen am Aufnahmeteil anliegen, von welchen die beiden Federarme beim Auslösen zum die Steckverbindung sichernden rastenden Eingriff zwischen Anlageflächen am Aufnahmeteil und einer Anlagefläche am Einsteckteil gleichzeitig lösbar sind.

Vorteilhaft kann die Füge- oder Einsteckbewegung selbst bei Erreichen der Endmontageposition, d.h. in der Endphase der Bewegung, die Auslösung der Sicherung des Einsteckteils am Aufnahmeteil bewirken. Hierbei ist das vorgespannt am Aufnahmeteil angebrachte Sicherungselement durch die in Fügerichtung erfolgende Einsteckbewegung des Einsteckteils bei Erreichen der Endmontageposition zur Auslösung positioniert.

Vorzugsweise sind die Halteflächen am Aufnahmeteil in Fügerichtung ansteigend angeordnet, damit zur Auslösung der Sicherung ein geringfügiges wenig Kraft erforderndes Auffedern des Federarms bzw. der Federarme zu erfolgen hat. Auf diese Weise wird einem unbeabsichtigten Auslösen des Sicherungselements entgegengewirkt, weil der Federarm bzw. die Federarme sich in stabiler Lage auf den Halteflächen befinden.

Die Auslösung der Sicherung des Einsteckteils am Aufnahmeteil erfolgt vorzugsweise, wenn am Ende der Einsteckbewegung, d.h. in der Endmontageposition, das Dichtelement zwischen dem Aufnahmeteil und dem Einsteckteil elastisch verformt ist. Die Rückfederungskraft des Dichtungselements sorgt dafür, dass der Federarm bzw. die Federarme spielfrei zwischen den Anlageflächen am Aufnahmeteil und der Anlagefläche am Einsteckteil eingerastet ist bzw. sind.

Um das Aufnahmeteil im Einsteckbereich des Einsteckteils gegen Verschmutzung zu schützen, insbesondere aber um ein unbeabsichtigtes Auslösen des am Aufnahmeteil vorgespannten Sicherungselements zu verhindern, kann vorgesehen sein, dass das Sicherungselement in der vorgespannten Vormontageposition durch einen Schutzstopfen geschützt ist, der anstelle des Einsteckteils in Fügerichtung in das Aufnahmeteil einsteckbar ist.

Dabei kann zweckmäßig der maximal mögliche Einsteckweg des Schutzstopfens am Aufnahmeteil durch am Schutzstopfen angebrachte Anschläge begrenzt sein, denen Anschlagflächen am Aufnahmeteil zugeordnet sind.

Es ist schließlich auch zweckmäßig, wenn der Schutzstopfen mit einem Abdeckelement versehen ist, welches bei maximal eingestecktem Schutzstopfen von dem Sicherungselement beabstandet ist, dieses aber im wesentlichen von außen übergreift. Auf diese Weise ist sichergestellt, dass das Abdeckelement des Schutzstopfens das vorgespannte Sicherungselement einerseits nicht selbst berühren und auslösen kann, andererseits aber verhindert wird, daß das Sicherungselement bei eingestecktem Schutzstopfen auslösbar ist.

### KURZE BESCHREIBUNG DER ZEICHNUNGEN

Weitere Einzelheiten und Merkmale der Erfindung werden nachfolgend anhand eines bevorzugten und in den beigefügten Zeichnungen dargestellten Ausführungsbeispiels näher erläutert. Darin zeigen in einem gegenüber den realen Abmessungen vergrößerten und zum Teil unterschiedlichen Maßstäben:
- Fig. 1: einen Längsschnitt durch die Steckverbindung mit Ihren Bestandteilen während des Einsteckvorgangs kurz vor Erreichen der Endmontageposition, d.h. kurz vor dem Auslösen des vorgespannten Sicherungselements,
- Fig. 2: den Längsschnitt durch die Steckverbindung in der in Fig. 1 gezeigten Relativlage ihrer Bestandteile, entsprechend der Schnittverlaufslinie II-II in Fig. 1,
- Fig. 3: den Querschnitt durch die Steckverbindung in der in den Fig. 1 und 2 gezeigten Relativlage ihrer Bestandteile, entsprechend der Schnittverlaufslinie III-III in Fig. 1,
- Fig. 4: eine perspektivische Ansicht des federelastischen Sicherungselements,
- Fig. 5: einen der Fig. 1 ähnlichen Längsschnitt durch die Steckverbindung mit ihren Bestandteilen in der Endmontageposition, gesichert gegen Herausziehen des Einsteckteils aus dem Aufnahmeteil durch das ausgelöste Sicherungselement,
- Fig. 6: den Längsschnitt durch die Steckverbindung in der in Fig. 5 gezeigten Relativlage ihrer Bestandteile, entsprechend der Schnittverlaufslinie VI-VI in Fig. 5,
- Fig. 7: den Querschnitt durch die Steckverbindung in der in den Fig. 5 und 6 gezeigten Relativlage ihrer Bestandteile, entsprechend der Schnittverlaufslinie VII-VII in Fig. 5,
- Fig. 8: eine perspektivische Ansicht der Steckverbindung in der in den Fig. 5 bis 7 gezeigten gesicherten Endmontageposition ihrer Bestandteile,
- Fig. 9: einen Längsschnitt durch das Aufnahmeteil der Steckverbindung mit vorgespanntem Sicherungselement und darin eingestecktem Schutzstopfen,
- Fig. 10: den Längsschnitt durch das Aufnahmeteil und den Schutzstopfen entsprechend der Schnittverlaufslinie X-X in Fig. 9,
- Fig. 11: den Querschnitt durch das Aufnahmeteil und den Schutzstopfen, entsprechend der Schnittverlaufslinie XI-XI in Fig. 9 und
- Fig. 12: eine perspektivische Ansicht des in den Fig. 9 bis 11 gezeigten Aufnahmeteils mit vorgespanntem Sicherungselement und eingestecktem Schutzstopfen.

### DETAILLIERTE BESCHREIBUNG DES BEVORZUGTEN AUSFÜHRUNGSBEISPIELS

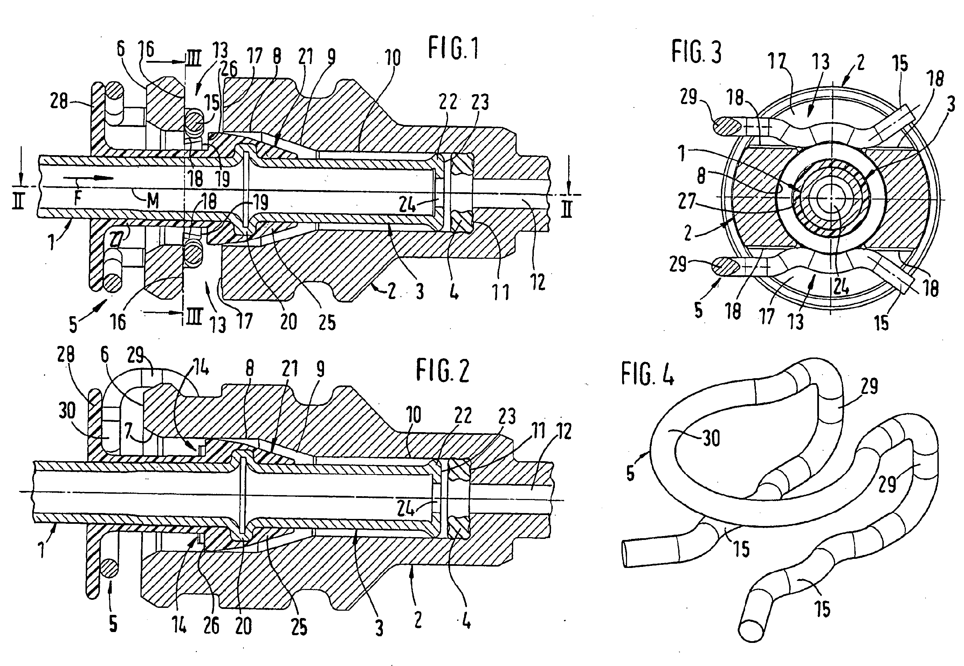

In den Fig. 1 bis 3 und 5 bis 8 ist als Beispiel eines Einsatzortes der erfindungsgemäßen lösbaren Steckverbindung der hydraulisch dichte Anschluß einer Rohrleitung 1 an das Aufnahmeteil 2 einer Hydraulikkomponente, wie an einen Geber- oder Nehmerzylinder, einen Druckmodulator für Bremsanlagen oder an andere hydraulische Brems- oder Kupplungsbetätigungseinheiten für Kraftfahrzeuge gezeigt. Die Steckverbindung kann aber auch für die hydraulisch dichte Verbindung zweier Rohrleitungen dienen, z.B. in einer hydraulischen Kupplungs- oder Bremsanlage für Kraftfahrzeuge. In den Zeichnungen sind die Rohrleitung 1 und das Aufnahmeteil 2 abgebrochen dargestellt.

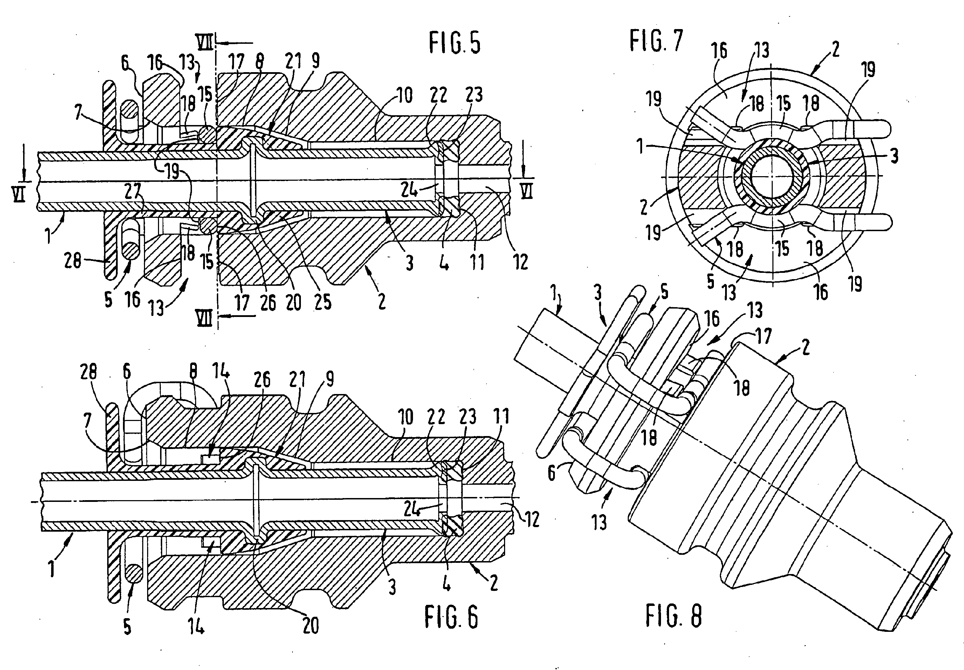

Wie insbesondere die Fig. 1, 2, 5, 6 und 8 zeigen, ist das Aufnahmeteil 2 hülsenartig geformt und dazu ausgebildet, ein in einer Fügerichtung F einsteckbares Einsteckteil 3 aufzunehmen, das mit der Rohrleitung 1 verbunden ist. Das Einsteckteil 3 kann, wie dargestellt, einteilig mit der Rohrleitung 1 ausgebildet sein. Die Steckverbindung weist zwischen dem Aufnahmeteil 2 und dem Einsteckteil 3 ein zwischen diesen Teilen in der Endmontageposition abdichtendes gummielastisches Dichtelement 4 auf, wie insbesondere die Fig. 5 und 6 verdeutlichen. Weiterhin ist am Aufnahmeteil 2 auf die noch zu beschreibende Weise ein federelastisches Sicherungselement 5 angebracht, welches in Fig. 4 einzeln dargestellt ist und dazu dient, das Einsteckteil 3 in der Endmontageposition am Aufnahmeteil 2 gegen Herausziehen lösbar zu sichern.

Das Aufnahmeteil 2, das vorzugsweise aus einem metallischen Werkstoff, wie Stahl oder einer Aluminiumlegierung geformt ist, besitzt eine zentrale als Stufenbohrung zur Aufnahme des Einsteckteils 3 ausgebildete Durchgangsbohrung. Die Durchgangsbohrung beginnt, beispielsweise in Fig. 2 von links nach rechts fortschreitend, an einer kreisringförmigen Stirnfläche 6 mit einer die Einführung des Einsteckteils 3 erleichternden Fase 7, an welche sich ein erster zylindrischer Bohrungsabschnitt 8 anschließt, der an einem konischen Übergangsabschnitt 9 endet, welchem ein zweiter zylindrischer Bohrungsabschnitt 10 kleineren Durchmessers folgt, der bis zu einer Ringstufe 11 reicht, an welcher ein dritter zylindrischer Bohrungsabschnitt 12 beginnt, dessen Durchmesser kleiner ist als der des zweiten zylindrischen Bohrungsabschnitts 10. Auf der Ringstufe 11 befindet sich das Dichtelement 4, im gezeigten Beispiel ein sog. Quadring aus einem für Hydraulikleitungen geeigneten elastomeren Werkstoff.

Das Aufnahmeteil 2 besitzt zwei diametral gegenüberliegende Querschlitze 13, die jeweils senkrecht zur Mittelachse M der Steckverbindung verlaufen und in der Innenwandfläche des ersten zylindrischen Bohrungsabschnitts 8 zwei gegenüberliegende Durchtrittsöffnungen 14 (Fig. 2, 6) für Federarme 15 des Sicherungselements 5 bilden. Seitenwandflächen 16 und 17 begrenzen die Querschlitze 13 und enden an den Seitenwandflächen 16 an jeweils zwei stufenförmig angeordneten Halteflächen 18 für die Federarme 15 des Sicherungselements 5. An die insgesamt vier Halteflächen 18 schließen sich senkrecht zur Mittelachse M gerichtete Anlageflächen 19 für die Federarme 15 an. Der axiale Abstand zwischen den Anlageflächen 19 und den Seitenwandflächen 17, d.h. die axiale Breite der Durchgriffsöffnungen 14, ist etwas größer als der Drahtdurchmesser des aus runden Federstahldraht gebogenen Sicherungselements 5.

Das Einsteckteil 3 weist einen Abschnitt der metallischen Rohrleitung 1 auf, bei der es sich bei Bremsenanwendungen in Kraftfahrzeugen in der Regel um ein doppelwandiges, innen und außen verkupfertes Stahlrohr handelt, welches außerdem aus Korrosionsschutzgründen am Außenumfang mit einer galvanisch aufgebrachten Zinkschicht versehen ist, auf der sich noch eine zusätzliche Kunststoffbeschichtung befindet. Vor dem Ende des Rohrleitungsabschnitts befindet sich ein angestauchter Bördelring 20, der über den Rohraußendurchmesser radial nach außen vorsteht und um den herum ein rotationssymmetrischer Kunststoffkörper 21 formschlüssig angespritzt ist. Der Kunststoffkörper 21 ist aus einem geeigneten thermoplastischen Kunststoff gespritzt, beispielsweise aus Polyamid 6.6, das einen Glasfaseranteil aufweisen kann.

Am äußeren Ende des Rohrabschnitts befindet sich ein weiterer angestauchter Bördelring 22, der eine stirnseitige Dichtfläche 23 aufweist, die in der Endmontageposition dem Dichtelement 4 unter dessen elastischer Verformung abdichtend anliegt, wie die Fig. 5 und 6 verdeutlichen. Eine zentrale Durchgangsbohrung 24 in der Dichtfläche 23 entspricht im Durchmesser etwa dem Durchmesser des dritten zylindrischen Bohrungsabschnitts 12 im Aufnahmeteil 2. Der Außendurchmesser des Bördelrings 22 ist etwas kleiner als der Durchmesser des zweiten zylindrischen Bohrungsabschnitts 10 im Aufnahmeteil 2, so dass das äußere Ende des Rohrabschnitts beim Einstecken des Einsteckteils 3 in das Aufnahmeteil 2 an der Innenwandfläche des zweiten zylindrischen Bohrungsabschnitts 10 geführt ist.

Der Kunststoffkörper 21 des Einsteckteils 3 übergreift den Bördelring 20 mit einem konischen Abschnitt 25, dessen Konuswinkel etwa demjenigen des konischen Übergangsabschnitts 9 entspricht. Der größte Durchmesser des konischen Abschnitts 25 ist etwas kleiner als der Durchmesser des ersten zylindrischen Bohrungsabschnitts 8, so dass der konische Abschnitt 25 bei dem Einsteckvorgang mit seinem Bereich größten Durchmessers axial geführt in dem Bohrungsabschnitt 8 verschiebbar ist. Der konische Abschnitt 25 ist nach außen zu durch eine senkrecht zur Mittelachse M gerichtete ringförmige Anlagefläche 26 für die beiden Federarme 15 des Sicherungselements 5 begrenzt. In der Endmontageposition, dargestellt in den Fig. 5 bis 8, befinden sich die Federarme 15 zwischen den Anlageflächen 19 am Aufnahmeteil 2 und der Anlagefläche 26 am Einsteckteil 3, wodurch das Einsteckteil gegen Herausziehen aus dem Aufnahmeteil gesichert ist.

Im Anschluss an die Anlagefläche 26 ist ein rohrförmiges Zwischenstück 27 des Kunststoffkörpers 21 vorgesehen, an welches außen ein Mitnehmer 28 angeschlossen ist. Der Mitnehmer 28 kann die Form einer senkrecht zur Mittelachse M ausgerichteten Platte oder, wie in Fig. 8 angedeutet ist, die Form eines Kreuzes oder eines Sterns aufweisen. Zwischenstück 27 und Mitnehmer 28 sind einteilige Bestandteile des an den Rohrleitungsabschnitt angespritzten Kunststoffkörpers 21.

Wie insbesondere aus Fig. 4 hervorgeht, sind die beiden Federarme 15 des Sicherungselements 5 über Bügelabschnitte 29 mit einem Bogenabschnitt 30 einteilig verbunden, wobei sich der Bogenabschnitt 30 in einer Ebene befindet, die im wesentlichen parallel zu der gemeinsamen Ebene der Federarme 15 gerichtet ist. Der Abstand zwischen den beiden Ebenen ist für den noch zu beschreibenden Auslösevorgang wichtig und ist auf den Abstand zwischen der Anlagefläche 26 und dem Mitnehmer 28 abgestimmt. Der Bogenabschnitt 30 weist einen Innendurchmesser auf, der ein berührungsfreies Hindurchführen des größten Durchmessers des konischen Abschnitts 25 des Kunststoffkörpers 21 des Einsteckteils 3 durch den Bogenabschnitt 30 ermöglicht.

Die Halteflächen 18 am Aufnahmeteil 2 sind in Fügerichtung F ansteigend angeordnet, wie beispielsweise aus den Fig. 1, 5 und 8 hervorgeht. Auf diese Weise kann das Sicherungselement 5 mit seinen Federarmen 15 beim seitlichen Aufschieben des Sicherungselements 5 auf das Aufnahmeteil 2 auf den Halteflächen 18, oder genauer ausgedrückt, auf den Innenkanten der Halteflächen 18, eine stabile Lage einnehmen. Beim Aufschieben von der Seite her in die Vormontageposition werden die Federarme 15 auseinandergebogen, bis sie unter Vorspannung auf den inneren Kanten der Halteflächen 18 ruhen. Das Sicherungselement 5 ist damit am Aufnahmeteil 2 wie ein Federspeicher vorgespannt vormontiert.

Wird jetzt das Einsteckteil 3 in das Aufnahmeteil 2 in Fügerichtung F eingeführt, so trifft der Mitnehmer 28 in der in den Fig. 1 bis 3 dargestellten Position der Teile auf den Bogenabschnitt 30 des Sicherungselements 5. Wird die Einsteckbewegung in Fügerichtung F fortgesetzt, so verlagert der Mitnehmer 28 das Sicherungselement 5 in Fügerichtung F durch Verschieben desselben am Aufnahmeteil 2. Hierbei verschieben sich die Federarme 15 unter geringfügiger elastischer Vergrößerung ihres gegenseitigen Abstandes an den Halteflächen 18, bis die Federvorspannung an beiden Federarmen 15 gleichzeitig ausgelöst wird, indem die Federarme 15 das Ende der in Fügerichtung ansteigenden Halteflächen 18 erreichen. Zu diesem Zeitpunkt ist das Dichtelement 4 zwischen der Ringstufe 11 und der Dichtfläche 23 des Bördelrings 22 bereits elastisch zusammengedrückt, wie das in den Fig. 5 und 6 angedeutet ist.

Bei dem Auslösevorgang schnappen die beiden Federarme 15 zwischen den Anlageflächen 19 am Aufnahmeteil 2 und der Anlagefläche 26 am Kunststoffkörper 21 des Einsteckteils 3 ein, wodurch sie die in den Fig. 5 bis 8 dargestellte Endmontageposition erreicht haben. Das Dichtelement 4 drückt mit seiner elastischen Rückstellkraft, ohne Verlust seiner Abdichtwirkung, die Anlagefläche 26 an die Federarme 15, die sich ihrerseits an den Anlageflächen 18 am Aufnahmeteil 2 abstützen. Das Einsteckteil 3 ist damit gegen Herausziehen aus dem Aufnahmeteil 2 zuverlässig durch das Sicherungselement 5 gesichert.

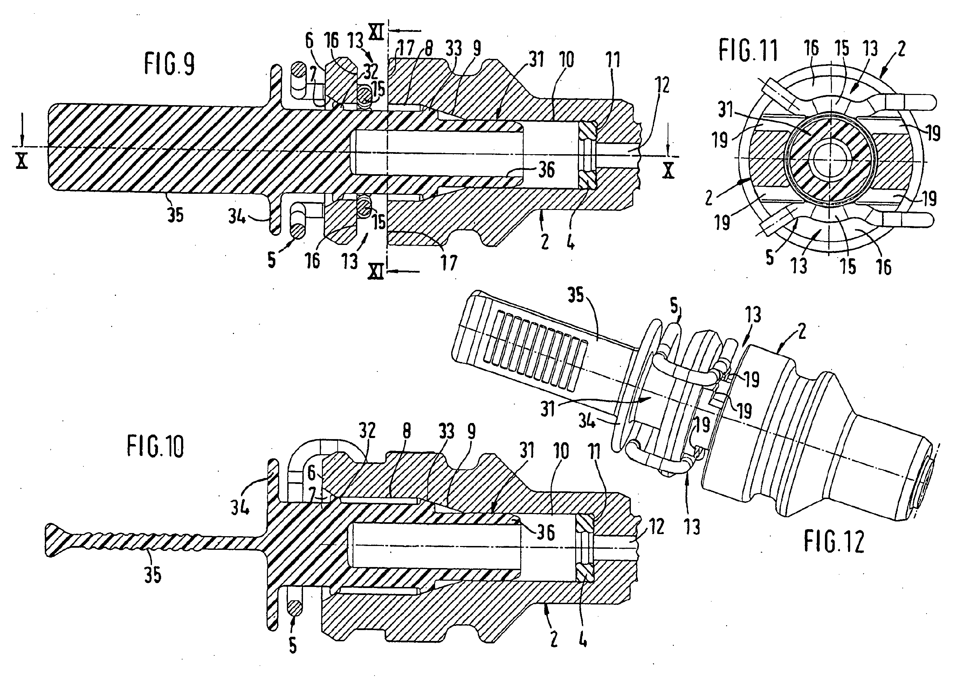

Wie in den Fig. 9 bis 12 dargestellt ist, kann das Sicherungselement 5 in der vorgespannten Vormontageposition durch einen Schutzstopfen 31 gegen unbeabsichtigtes Auslösen geschützt werden. Der Schutzstopfen 31 ist anstelle des Einsteckteils 3 in Fügerichtung F in das Aufnahmeteil 2 einsteckbar. Der maximal mögliche Einsteckweg des Schutzstopfens 31 ist durch am Schutzstopfen 31 angebrachte Anschläge 32 und 33 begrenzt, denen Anschlagflächen am Aufnahmeteil 2 zugeordnet sind. Im gezeigten Beispiel dient die Fase 7 als Anschlagfläche für die Anschläge 32 und die Konusfläche am Übergangsabschnitt 9 als Anschlagfläche für die Anschläge 33.

Der aus einem geeigneten Kunststoff einteilig spritzgeformte Schutzstopfen 31 ist mit einem scheibenförmigen Abdeckelement 34 versehen, welches bei maximal in das Aufnahmeteil 2 eingestecktem Schutzstopfen 31 von dem Bogenabschnitt 30 des Sicherungselements 5 ausreichend beabstandet ist, so dass der Schutzstopfen 31 das Sicherungselement 5 nicht auslösen kann. Die Abmessungen des Abdeckelements 34 werden zweckmäßig so gewählt, dass es das Sicherungselement 5 schützend übergreift. An das Abdeckelement 34 ist ein die Handhabung des Schutzstopfens 31 erleichternder Griff 35 angebracht. Der Schutzstopfen 31 wird mit seinem inneren rohrförmigen Endbereich 36 im Reibschluß im zweiten zylindrischen Bohrungsabschnitt 10 des Aufnahmeteils 2 gehalten.

Im vorstehend beschriebenen Ausführungsbeispiel sind die Halteflächen 18 am Aufnahmeteil 2 in Fügerichtung F ansteigend angeordnet, damit die Federarme 15 des Sicherungselements 5 in der Vormontageposition an den Halteflächen 18 eine stabile Lage einnehmen. Zusätzlich zur ansteigenden Ausrichtung der Halteflächen oder anstelle einer ansteigenden Ausrichtung derselben können an den Halteflächen auch kleine Erhebungen, wie Noppen, oder kleine Vertiefungen, wie Nuten, angeordnet sein (nicht in den Zeichnungen dargestellt), an bzw. in welche die Federarme in der Vormontageposition angreifen bzw. eingreifen, um ein unbeabsichtigtes Auslösen des federelastischen Sicherungselements weiter zu erschweren.

Im vorstehend beschriebenen Ausführungsbeispiel ist das Sicherungselement 5 wie bei dem eingangs angegebenen Stand der Technik aus einem im Querschnitt runden, d.h. kreisförmigen, Federstahldraht gebogen. Diese Querschnittsgeometrie ist jedoch nicht zwingend erforderlich. Es können auch Federstahldrähte mit mehreckigen Querschnittsflächen zum Einsatz gelangen, beispielsweise mit quadratischen Querschnittsflächen.

Vorgeschlagen wird eine lösbare Steckverbindung für Hydraulikleitungen und -aggregate, insbesondere zur Verwendung an Kraftfahrzeugen, bestehend aus einem Aufnahmeteil und einem komplementär zugeordneten und in der Endmontageposition gegenüber dem Aufnahmeteil abgedichteten Einsteckteil. Ein federelastisches Sicherungselement, das in einer Vormontageposition am Aufnahmeteil unverlierbar und als Federkraftspeicher vorgespannt angebracht ist, wird beim Einfügen des Einsteckteils in das Aufnahmeteil bei Erreichen der Endmontageposition durch das Einsteckteil so relativ zum Aufnahmeteil verlagert, dass seine gespeicherte Federkraft durch die Fügebewegung selbst ausgelöst und das Sicherungselement zwischen Anlageflächen des Aufnahmeteils und des Einsteckteils zum kraftschlüssigen Einrasten gelangt. Die dadurch erzielte axiale Verriegelung zwischen Aufnahmeteil und Einsteckteil kann beim Lösen der Steckverbindung dann nur durch seitliches Abschieben des Sicherungselements erreicht werden, wozu das Sicherungselement elastisch aufzubiegen ist. Die Vormontageposition des Sicherungselements am Aufnahmeteil kann durch axiales Einschieben eines Schutzstopfens anstelle des Einsteckteils in das Aufnahmeteil für Transport- und Handhabungszwecke gesichert werden.

### BEZUGSZEICHENLISTE

- 1: Rohrleitung
- 2: Aufnahmeteil
- 3: Einsteckteil
- 4: Dichtelement
- 5: Sicherungselement
- 6: Stirnfläche
- 7: Fase
- 8: erster zylindrischer Bohrungsabschnitt
- 9: konischer Übergangsabschnitt
- 10: zweiter zylindrischer Bohrungsabschnitt
- 11: Ringstufe
- 12: dritter zylindrischer Bohrungsabschnitt
- 13: Querschlitz
- 14: Durchgriffsöffnung
- 15: Federarm
- 16: Seitenwandfläche
- 17: Seitenwandfläche
- 18: Haltefläche
- 19: Anlagefläche
- 20: Bördelring
- 21: Kunststoffkörper
- 22: Bördelring
- 23: Dichtfläche
- 24: Durchgangsbohrung
- 25: konischer Abschnitt
- 26: Anlagefläche
- 27: Zwischenstück
- 28: Mitnehmer
- 29: Bügelabschnitt
- 30: Bogenabschnitt
- 31: Schutzstopfen
- 32: Anschlag
- 33: Anschlag
- 34: Abdeckelement
- 35: Griff
- 36: rohrförmiger Endbereich

- F: Fügerichtung
- M: Mittelachse

## Patentansprüche

1. Lösbare Steckverbindung für Rohrleitungen od. dgl., insbesondere in hydraulischen Kupplungsbetätigungs- und Bremsanlagen für Kraftfahrzeuge, mit einem Aufnahmeteil (2), einem in das Aufnahmeteil (2) in einer Fügerichtung (F) einsteckbaren, mit der Rohrleitung (1) od. dgl. verbundenen Einsteckteil (3), einem zwischen dem Aufnahmeteil (2) und dem Einsteckteil (3) abdichtenden Dichtelement (4) und einem am Aufnahmeteil (2) in einer Vormontageposition angebrachten, federelastischen Sicherungselement (5) zur Sicherung des Einsteckteils (3) am Aufnahmeteil (2) in der Endmontageposition der Steckverbindung, wobei das Sicherungselement (5) in der Vormontageposition als Federkraftspeicher vorgespannt am Aufnahmeteil (2) angebracht und aus seinem vorgespannten Zustand in der Endmontageposition der Steckverbindung zur Sicherung des Einsteckteils (3) am Aufnahmeteil (2) auslösbar ist, **dadurch gekennzeichnet, dass** das Sicherungselement (5) zum Auslösen der Sicherung des Einsteckteils (3) am Aufnahmeteil (2) durch das Einsteckteil (3) in Fügerichtung (F) verlagerbar am Aufnahmeteil (2) angeordnet ist, wobei am Einsteckteil (3) ein für die Verlagerung des Sicherungselements (5) vorgesehener Mitnehmer (28) fest angebracht ist.

2. Steckverbindung nach Anspruch 1, **dadurch gekennzeichnet, dass** das Sicherungselement (5) in der Vormontageposition mit mindestens einem Federarm (15) quer zur Fügerichtung unter Erzeugung des vorgespannten Zustands nach außen gebogen mindestens einer Haltefläche (18) am Aufnahmeteil (2) anliegt, von welcher der Federarm (15) beim Auslösen zum die Steckverbindung sichernden rastenden Eingriff zwischen einer Anlagefläche (19) am Aufnahmeteil (2) und einer Anlagefläche (26) am Einsteckteil (3) lösbar ist.

3. Steckverbindung nach Anspruch 2, **dadurch gekennzeichnet, dass** das Sicherungselement (5) zwei gegenüberliegende Federarme (15) besitzt, die in der Vormontageposition auseinandergebogen gegenüberliegenden Halteflächen (18) am Aufnahmeteil (2) anliegen, von welchen die beiden Federarme (15) beim Auslösen zum die Steckverbindung sichernden rastenden Eingriff zwischen Anlageflächen (19) am Aufnahmeteil (2) und einer Anlagefläche (26) am Einsteckteil (3) gleichzeitig lösbar sind.

4. Steckverbindung nach Anspruch 1, **dadurch gekennzeichnet, dass** das vorgespannt am Aufnahmeteil (2) angebrachte Sicherungselement (5) durch die in Fügerichtung erfolgende Einsteckbewegung des Einsteckteils (3) bei Erreichen der Endmontageposition zur Auslösung positioniert ist.

5. Steckverbindung nach einem der Ansprüche 1 bis 4, **dadurch gekennzeichnet, dass** der Mitnehmer (28) einteilig an das Einsteckteil (3) angeformt ist.

6. Steckverbindung nach Anspruch 2 oder 3, **dadurch gekennzeichnet, dass** die Halteflächen (18) am Aufnahmeteil (2) in Fügerichtung ansteigend angeordnet sind.

7. Steckverbindung nach einem der Ansprüche 1 bis 6, **dadurch gekennzeichnet, dass** die Sicherung des Einsteckteils (3) am Aufnahmeteil (2) zur Auslösung vorgesehen ist, wenn das Dichtelement (4) zwischen dem Aufnahmeteil (2) und dem Einsteckteil (3) in der Endmontageposition elastisch verformt ist.

8. Steckverbindung nach einem der Ansprüche 1 bis 7, **dadurch gekennzeichnet, dass** das Sicherungselement (5) in der vorgespannten Vormontageposition durch einen Schutzstopfen (31) gegen unbeabsichtigtes Auslösen geschützt ist, der anstelle des Einsteckteils (3) in Fügerichtung in das Aufnahmeteil (2) einsteckbar ist.

9. Steckverbindung nach Anspruch 8, **dadurch gekennzeichnet, dass** der maximal mögliche Einsteckweg des Schutzstopfens (31) am Aufnahmeteil (2) durch am Schutzstopfen (31) angebrachte Anschläge (32, 33) begrenzt ist, denen Anschlagflächen am Aufnahmeteil (2) zugeordnet sind.

10. Steckverbindung nach Anspruch 9, **dadurch gekennzeichnet, dass** der Schutzstopfen (31) mit einem Abdeckelement (34) versehen ist, welches bei maximal eingestecktem Schutzstopfen (31) von dem Sicherungselement (5) beabstandet ist, dieses aber im Wesentlichen von außen schützend übergreift.

## Claims

1. Releasable plug-in connection for pipelines or the like, in particular in hydraulic clutch actuation and brake systems for motor vehicles, comprising a receiving part (2), a plug-in part (3) which is connected to the pipeline (1) or the like and can be inserted into the receiving part (2) in a joining direction (F), a sealing element (4) for sealing between the receiving part (2) and the plug-in part (3), and a springelastic securing element (5) which is fitted on the receiving part (2) in a pre-assembly position and is designed to secure the plug-in part (3) to the receiving part (2) in the final assembled position of the plug-in connection, wherein the securing element (5) in the pre-assembly position is fitted on the receiving part (2) in a prestressed manner as a spring force store and can be released from its prestressed state in the final assembled position of the plug-in connection in order to secure the plug-in part (3) to the receiving part (2), **characterized in that** the securing element (5) is arranged on the receiving part (2) such that it can be displaced in the joining direction (F) by the plug-in part (3) in order to trigger the securing of the plug-in part (3) to the receiving part (2), wherein a tappet (28) which is provided for displacing the securing element (5) is fixedly attached to the plug-in part (3).

2. Plug-in connection according to claim 1, **characterized in that** the securing element (5) in the pre-assembly position bears against at least one retaining surface (18) on the receiving part (2) with at least one spring arm (15) in an outwardly curved manner transversely to the joining direction so as to create the prestressed state, from which the spring arm (15) can be released when triggered in order to bring about the latching engagement between a bearing surface (19) on the receiving part (2) and a bearing surface (26) on the plug-in part (3) so as to secure the plug-in connection.

3. Plug-in connection according to claim 2, **characterized in that** the securing element (5) has two opposite spring arms (15) which in the pre-assembly position, bent in opposite directions, bear against retaining surfaces (18) on the receiving part (2), from which the two spring arms (15) can be released simultaneously when triggered in order to bring about the latching engagement between bearing surfaces (19) on the receiving part (2) and a bearing surface (26) on the plug-in part (3) so as to secure the plug-in connection.

4. Plug-in connection according to claim 1, **characterized in that** the securing element (5) fitted in a prestressed manner on the receiving part (2) is positioned so as to be triggered by the insertion movement of the plug-in part (3) when the final assembled position is reached, said insertion movement taking place in the joining direction.

5. Plug-in connection according to one of claims 1 to 4, **characterized in that** the tappet (28) is integrally formed in one piece on the plug-in part (3).

6. Plug-in connection according to claim 2 or 3, **characterized in that** the retaining surfaces (18) on the receiving part (2) are arranged with an upward incline in the joining direction.

7. Plug-in connection according to one of claims 1 to 6, **characterized in that** the securing of the plug-in part (3) to the receiving part (2) is provided so as to be triggered when the sealing element (4) between the receiving part (2) and the plug-in part (3) is elastically deformed in the final assembled position.

8. Plug-in connection according to one of claims 1 to 7, **characterized in that** the securing element (5) in the prestressed pre-assembly position is protected against inadvertent triggering by a protective stopper (31) which can be inserted into the receiving part (2) in the joining direction instead of the plug-in part (3).

9. Plug-in connection according to claim 8, **characterized in that** the maximum possible insertion travel of the protective stopper (31) on the receiving part (2) is limited by stops (32, 33) fitted on the protective stopper (31), which are associated with stop surfaces on the receiving part (2).

10. Plug-in connection according to claim 9, **characterized in that** the protective stopper (31) is provided with a cover element (34) which, with the protective stopper (31) inserted to a maximum, is spaced apart from the securing element (5) but engages essentially over the latter from outside in a protective manner.

## Revendications

1. Raccord de liaison à emmanchement, démontable, destiné à des conduites tubulaires ou similaires, notamment dans des installations hydrauliques de freinage et d'actionnement d'embrayage pour véhicules automobiles, comprenant une pièce femelle (2), une pièce mâle (3) pouvant être emmanchée dans la pièce femelle (2) selon une direction d'assemblage (F) et reliée à la conduite tubulaire (1) ou similaire, un élément d'étanchéité (4) assurant l'étanchéité entre la pièce femelle (2) et la pièce mâle (3), et un élément de retenue (5) présentant une élasticité de ressort, placé sur la pièce femelle (2) dans une position de montage préalable et destiné à retenir la pièce mâle (3) sur la pièce femelle (2) dans la position de montage finale du raccord de liaison à emmanchement, l'élément de retenue (5) étant placé, dans la position de montage préalable, en tant qu'accumulateur de force de ressort, en précontrainte sur la pièce femelle (2), et pouvant, à partir de son état précontraint, être déclenché dans la position de montage finale du raccord de liaison à emmanchement, pour retenir la pièce mâle (3) dans la pièce femelle (2), **caractérisé en ce que** l'élément de retenue (5), pour déclencher la retenue de la pièce mâle (3) dans la pièce femelle (2), est agencé sur la pièce femelle (2) de manière déplaçable par la pièce mâle (3), dans la direction d'assemblage (F), un entraîneur (28) prévu pour déplacer l'élément de retenue (5) étant placé de manière fixe sur la pièce mâle (3).

2. Raccord de liaison à emmanchement selon la revendication 1, **caractérisé en ce que** l'élément de retenue (5), dans la position de montage préalable, s'appuie, avec au moins un bras de ressort (15), transversalement à la direction d'assemblage, écarté vers l'extérieur en produisant l'état de précontrainte, contre au moins une surface de maintien (18) sur la pièce femelle (2), surface de maintien de laquelle le bras de ressort (15) peut être détaché lors du déclenchement, pour venir en prise par encliquetage entre une surface d'appui (19) sur la pièce femelle (2) et une surface d'appui (26) sur la pièce mâle (3), en assurant la sécurisation du raccord de liaison à emmanchement.

3. Raccord de liaison à emmanchement selon la revendication 2, **caractérisé en ce que** l'élément de retenue (5) possède deux bras de ressort (15) opposés, qui, dans la position de montage préalable, s'appuient, en étant écartés, sur des surfaces de maintien (18) opposées sur la pièce femelle (2), surfaces de maintien desquelles les deux bras de ressort (15) peuvent être détachés simultanément lors du déclenchement, pour venir en prise par encliquetage entre des surfaces d'appui (19) sur la pièce femelle (2) et une surface d'appui (26) sur la pièce mâle (3), en assurant la sécurisation du raccord de liaison à emmanchement.

4. Raccord de liaison à emmanchement selon la revendication 1, **caractérisé en ce que** l'élément de retenue (5) placé en précontrainte sur la pièce femelle (2), est positionné par le mouvement d'emmanchement de la pièce mâle (3) s'effectuant dans la direction d'assemblage, pour déclencher lorsque la position de montage finale est atteinte.

5. Raccord de liaison à emmanchement selon l'une des revendications 1 à 4, **caractérisé en ce que** l'entraîneur (28) est formé d'une seule pièce sur la pièce mâle (3).

6. Raccord de liaison à emmanchement selon la revendication 2 ou la revendication 3, **caractérisé en ce que** les surfaces de maintien (18) sur la pièce femelle (2), sont agencées de manière à être ascendantes dans la direction d'assemblage.

7. Raccord de liaison à emmanchement selon l'une des revendications 1 à 6, **caractérisé en ce que** la retenue de la pièce mâle (3) dans la pièce femelle (2) est prévue pour déclencher lorsque l'élément d'étanchéité (4) est déformé élastiquement entre la pièce femelle (2) et la pièce mâle (3) dans la position de montage finale.

8. Raccord de liaison à emmanchement selon l'une des revendications 1 à 7, **caractérisé en ce que** l'élément de retenue (5), dans la position précontrainte de montage préalable, est protégé à l'encontre d'un déclenchement intempestif par un bouchon de protection (31), qui peut être emmanché dans la pièce femelle (2), dans la direction d'assemblage, à la place de la pièce mâle (3).

9. Raccord de liaison à emmanchement selon la revendication 8, **caractérisé en ce que** la course d'emmanchement maximale du bouchon de protection (31) dans la pièce femelle (2) est limitée par des butées (32, 33) placées sur le bouchon de protection (31), auxquelles sont associées des surfaces de butée sur la pièce femelle (2).

10. Raccord de liaison à emmanchement selon la revendication 9, **caractérisé en ce que** le bouchon de protection (31) est muni d'un élément de recouvrement (34), qui, lorsque le bouchon de protection (31) est emmanché au maximum, est situé à distance de l'élément de retenue (5), mais le surmonte sensiblement de l'extérieur en le protégeant.
